# EUROPEAN PATENT SPECIFICATION

(11) **EP 4 137 797 B1**
(45) Date of publication and mention of the grant of the patent: **23.07.2025**
(21) Application number: 20931137.2
(22) Date of filing: 13.04.2020
(51) Int. Cl.: G01N 21/31, G01N 21/82

(54) **ANTI-INTERFERENCE DETECTION METHOD AND SAMPLE ANALYZER**
ANTIINTERFERENZDETEKTIONSVERFAHREN UND PROBENANALYSATOR
PROCÉDÉ DE DÉTECTION D'ANTI-INTERFERENCE ET ANALYSEUR D'ÉCHANTILLONS

(43) Date of publication of application: 22.02.2023
(73) Proprietor: Shenzhen Mindray Bio-Medical Electronics Co., Ltd., Shenzhen, Guangdong 518057 (CN); Beijing Mindray Medical Instrument Co., Ltd., Beijing 102206 (CN)
(72) Inventor: SI, Xinchun, Shenzhen, Guangdong 518057 (CN); GUO, Wenheng, Shenzhen, Guangdong 518057 (CN); SUN, Xiao, Shenzhen, Guangdong 518057 (CN)
(74) Representative: KIPA AB
(86) International application number: PCT/CN2020/084418
(87) International publication number: WO 2021/207871

(56) References cited:
- CN-A- 102 288 566
- CN-A- 104 034 672
- CN-A- 104 395 729
- CN-A- 105 223 137
- CN-A- 105 823 739
- CN-A- 107 315 094
- CN-A- 110 609 002
- CN-U- 208 013 072
- JP-A- 2007 263 907
- US-A1- 2007 222 973
- US-A1- 2008 144 005
- US-A1- 2008 158 552
- US-B2- 7 842 509

## Description

### TECHNICAL FIELD

The disclosure relates to the technical field of sample test, and in particular, to an anti-interference test method and a sample analyzer.

### BACKGROUND

When coagulation items are tested by using an optical method, the absorbance of a solution is usually obtained by irradiating the solution in a reaction cup with collimated light and analyzing scattered or transmitted light, so as to obtain a coagulation time or the concentration of a matter to be tested.

In general, normal plasma is light yellow and transparent and has very low absorbance, while a jaundice and hemolysis sample with an obvious absorption peak, and a chylous sample which may seriously affect the transmittance may affect the measurement and challenge the credibility of the optical method.

On this basis, the prior art provides a sample pre-test-based anti-interference method. The method needs to perform interferent test on a sample in advance, and determine whether anti-interference measurement needs to be performed on the basis of a test result.

Common anti-interference methods have the following problems.
1. Blood sample waste: blood samples are wasted for interferent test.
2. Reaction cup waste or colorimetric cell structure addition: the interferent test is usually performed by using a cup splitting method or a colorimetric cell method. The former one is a waste of reaction cups and increases the test cost, and the later one increases the instrument complexity.
3. Process addition: an interferent measurement process is added, so that the item test speed for the sample is reduced.

In view of this, how to realize the anti-interference measurement of the sample without sample pre-test is an urgent problem to be solved.

Related technologies can be found at least in patent document US7842509B2.

### SUMMARY

The embodiments of the disclosure provide an anti-interference test method and a sample analyzer, which are used for realizing anti-interference processing for a sample without sample pre-test.

The present invention is defined in the appended set of claims.

In the technical solution provided by the embodiments of the disclosure, a reagent for performing item test is added to a sample and is mixed uniformly to obtain a sample mixture; the sample mixture is irradiated by using multi-wavelength light, herein the multi-wavelength light includes a primary wavelength and a secondary wavelength corresponding to a measurement item of the sample; the initial light intensity *γ*1 of the primary wavelength, the initial light intensity *γ*2 of the secondary wavelength, and a light intensity threshold value *α* corresponding to the measurement item are acquired; and the anti-interference test method is performed on the sample according to comparison results of *γ*1 and *γ*2 with *α .* Therefore, the anti-interference measurement of the sample is realized without pre-test of sample interference.

### BRIEF DESCRIPTION OF THE DRAWINGS

FIG. 1 illustrates a schematic structural diagram of a sample analyzer in the embodiments of the disclosure.
FIG. 2 illustrates another schematic structural diagram of a sample analyzer in the embodiments of the disclosure.
FIG. 3 illustrates another schematic structural diagram of a sample analyzer in the embodiments of the disclosure.
FIG. 4 illustrates a schematic diagram of an embodiment of an anti-interference test method in the embodiments of the disclosure.
FIG. 5 illustrates detailed steps of S404 of the embodiment in FIG. 4 in the embodiments of the disclosure.
FIG. 6 illustrates a schematic diagram of another embodiment of an anti-interference test method in the embodiments of the disclosure.
FIG. 7 illustrates a schematic diagram of another embodiment of an anti-interference test method in the embodiments of the disclosure.
FIG. 8 illustrates a schematic diagram of another embodiment of the anti-interference test method in the embodiments of the disclosure.
FIG. 9 illustrates a schematic diagram of another embodiment of an anti-interference test method in the embodiments of the disclosure.
FIG. 10 illustrates a schematic diagram of another embodiment of an anti-interference test method, which is present for illustration purpose and is not part of the present invention.
FIG. 11 illustrates a schematic diagram of an embodiment of a sample analyzer in the embodiments of the disclosure.

### DETAILED DESCRIPTION

Technical solutions in the embodiment of the present disclosure will be clearly and completely described below with reference to the drawings in the embodiments of the present disclosure. Apparently, the described embodiments are merely part rather than all of the embodiments of the present disclosure. On the basis of the embodiments of the present disclosure, all other embodiments obtained on the premise of no creative work of those skilled in the art fall within the scope of protection of the present disclosure.

Terms "first", "second", "third", "fourth", etc., (if existing), in the specification, claims, and drawings of the disclosure are adopted not to describe a specific sequence or order but to distinguish similar objects. It should be understood that the data termed in such a way are interchangeable in proper circumstances so that the embodiments described herein can be implemented in orders other than the order illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

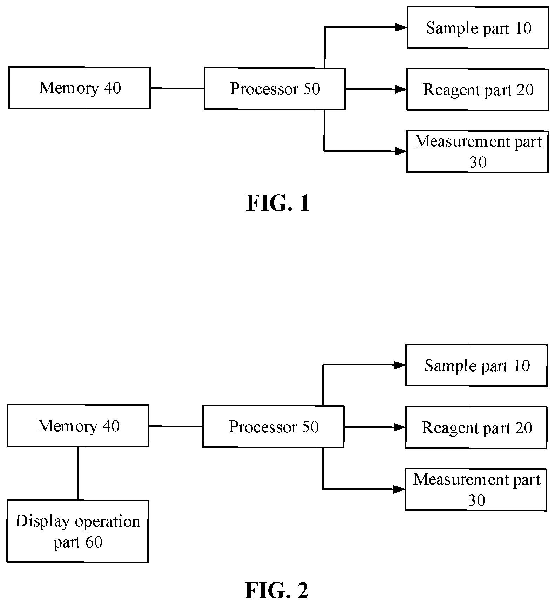

The structure of the sample analyzer is described first before specifically describing the disclosure. Referring to FIG. 1, in an embodiment, the sample analyzer may include a sample part 10, a reagent part 20, a measurement part 30, a memory 40, and a processor 50. In some embodiments, referring to FIG. 2, the sample analyzer may further include a display operation part 60. The following is a detailed description.

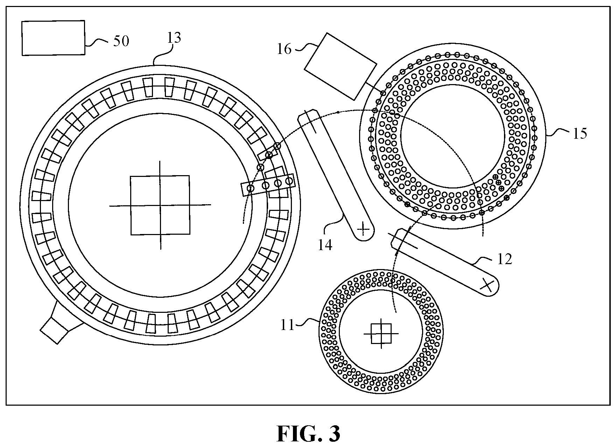

The sample part 10 is configured to carry a sample in a test solution, suck the sample, and provide the sample to the measurement part 30. Referring to FIG. 3, the sample part 10 in some embodiments may include a sample carrying part 11 and a sample dispensing mechanism 12. The sample carrying part 11 is configured to carry the sample. In some embodiments, the sample carrying part 11 may include a Sample Delivery Module (SDM) and a front-end rail. In some other embodiments, for example, FIG. 3 is such an example, the sample carrying part 11 may be a sample tray. The sample tray includes a plurality of sample positions where sample tubes may be placed. By rotating a disc structure of the sample tray, a sample may be scheduled to a corresponding position, such as a position for the sample dispensing mechanism 12 to suck the sample. The sample dispensing mechanism 12 is configured to suck the sample and discharge the sample into a reaction cup to be added with the sample. For example, the sample dispensing mechanism 12 may include a sample needle. The sample needle performs two-dimensional or three-dimensional movement in space through a two-dimensional or three-dimensional driving mechanism, so that the sample needle can move to suck the sample carried by the sample carrying part 11, move to a position of a reaction cup to be added with the sample, and discharge the sample into the reaction cup.

The reagent part 20 is configured to carry a reagent in a test solution, suck the reagent, and provide the reagent to the measurement part 30. In some embodiments, the reagent part 20 may include a reagent carrying part 13 and a reagent dispensing mechanism 14. The reagent carrying part 13 is configured to carry the reagent. In an embodiment, the reagent carrying part 13 may be a reagent tray. The reagent tray is arranged in a disc structure and has a plurality of positions configured to carry reagent vessels. The reagent carrying part 13 can rotate and drive the reagent vessels carried by the reagent carrying part 13 to rotate, so as to rotate the reagent vessels to specific positions, for example, a position for the reagent dispensing mechanism 14 to suck the reagent. There may be one or more reagent carrying parts 13. The sample dispensing mechanism 14 is configured to suck the reagent and discharge the reagent into a reaction cup to be added with the reagent. In some embodiments, the sample dispensing mechanism 14 may include a reagent needle. The reagent needle performs two-dimensional or three-dimensional movement in space through a two-dimensional or three-dimensional driving mechanism, so that the reagent needle can move to suck the reagent carried by the reagent carrying part 13, move to a reaction cup to be added with the reagent, and discharge the reagent into the reaction cup.

The measurement part 30 is configured to perform item testing on the sample, so as to obtain test data of items. In some embodiments, the measurement part 30 may include a reaction part 15 and an optical measurement part 16. Specifically, in the embodiments of the disclosure, the reaction part is a measurement container. The measurement container is configured to carry a mixture prepared by a sample and a testing reagent. The optical measurement part 16 is configured to perform optical measurement on the mixture to obtain reaction data of the sample. If the optical measurement part 16 tests the luminous intensity of a reaction solution to be tested, the concentration and the like of a component to be tested in the sample are obtained by querying a calibration curve. Specifically, in the present embodiment, the optical measurement part 16 includes a multi-wavelength light source, a spectrometer, an optical processing apparatus, and a signal collection apparatus. In some embodiments, the optical measurement part 16 may also be separately arranged outside the reaction part 15.

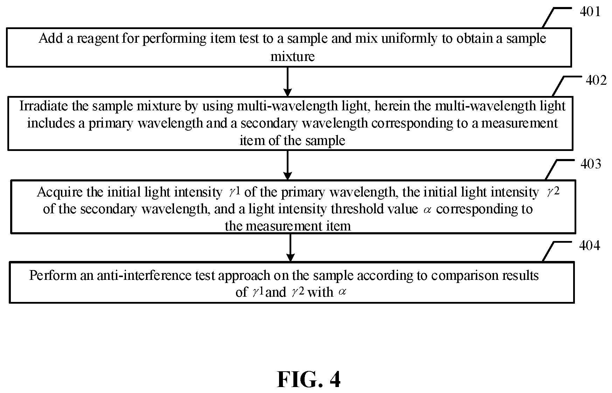

Based on the embodiments described in FIG. 1 to FIG. 3, the anti-interference test method in the embodiments of the disclosure is described below. Referring to FIG. 4, an embodiment of the anti-interference test method in the embodiments of the disclosure includes the following steps.

At 401, a reagent for performing item test is added to a sample and is mixed uniformly to obtain a sample mixture.

This is different from the prior art, in which it is necessary to measure the content of an interferent in the sample first and analyze the test items of the sample according to the measured content of the interferent, thus causing the problems of too many measurement steps for the test item of the sample and low test efficiency.

The disclosure provides an anti-interference test method. The method does not need to determine the content of the interferent in the sample in advance, but directly performs item test on the sample, so that a sample pre-test step is omitted compared with the prior art, and the item test efficiency of the sample is improved.

Specifically, before the item test is performed on the sample, a reagent for performing the item test needs to be added to the sample and mixed uniformly to obtain a sample mixture.

At 402, the sample mixture is irradiated by using multi-wavelength light, herein the multi-wavelength light may include a primary wavelength and a secondary wavelength corresponding to a measurement item of the sample.

When performing multi-wavelength test item analysis (such as immunoturbidimetry-based item test) on the sample, a general test item has the primary wavelength and secondary wavelength corresponding to the test item itself. In the present embodiment, after the sample mixture is obtained, the sample mixture is irradiated by using the multi-wavelength light including at least the primary wavelength and the secondary wavelength.

The selection of the primary wavelength and the secondary wavelength of the test items mainly depend on the reagent requirements during the test items. When performing a test item on the sample, on one hand, it is required that the primary wavelength can characterize a reaction process between a sample and a reagent as much as possible, and on the other hand, it is also required to ensure that the signal intensity (i.e., the intensity of transmitted light) collected by the optical measurement part in the overall test process meets the requirement of the test items.

At 403, the initial light intensity *γ*1 of the primary wavelength, the initial light intensity *γ*2 of the secondary wavelength, and a light intensity threshold value *α* corresponding to the measurement item are acquired.

It is easy to understand that when performing the item test on the sample, certain interference will be caused to the item test result of the sample if the content of the interferent in the sample exceeds an interferent content threshold value, so that the accuracy of the item test of the sample is reduced.

In order to ensure the accuracy of the item test result of the sample, when performing the item test on the sample by using the optical measurement part, it is generally required that the light intensity that can be measured by the optical measurement is greater than a certain threshold value, so as to ensure the accuracy of the item test result of the sample. Each measurement item of the sample corresponds to a respective light intensity threshold value, and the light intensity threshold value is generally determined by experiments.

Therefore, in order to ensure the accuracy of the item test result of the sample, that is, in order to realize the anti-interference measurement of the sample, the embodiments of the disclosure need to correspondingly obtain an initial light intensity *γ*1 of the primary wavelength and an initial light intensity *γ*2 of the secondary wavelength matched with a measurement item, and a light intensity threshold value *α* corresponding to the measurement item, and S404 is executed according to a relationship among various light intensity values.

At 404, an anti-interference test approach is performed on the sample according to comparison results of *γ*1 and *γ*2 with *α.*

After the initial light intensity *γ*1 of the primary wavelength and the initial light intensity *γ*2 of the secondary wavelength matched with the measurement item, and the light intensity threshold value *α* corresponding to the measurement item are obtained, the anti-interference test approach is performed on the sample according to comparison results of *γ*1 and *γ*2 with *α* in the embodiments of the disclosure, so as to ensure the accuracy of the item measurement result of the sample.

A process of how to perform the anti-interference test approach on the sample according to comparison results of *γ*1and *γ*2 with *α* will be described in detail in the following embodiments, which will not be elaborated herein.

In the technical solution according to the embodiments of the disclosure, a reagent for performing item test is added to a sample and is mixed uniformly to obtain a sample mixture; the sample mixture is irradiated by using multi-wavelength light, herein the multi-wavelength light includes a primary wavelength and a secondary wavelength corresponding to a measurement item of the sample; an initial light intensity *γ*1 of the primary wavelength, an initial light intensity *γ*2 of the secondary wavelength, and a light intensity threshold value *α* corresponding to the measurement item are acquired; and an anti-interference test approach is performed on the sample according to comparison results of *γ*1 and *γ*2 with *α* . Therefore, an anti-interference measurement of the sample is realized without interferent pre-test of the sample.

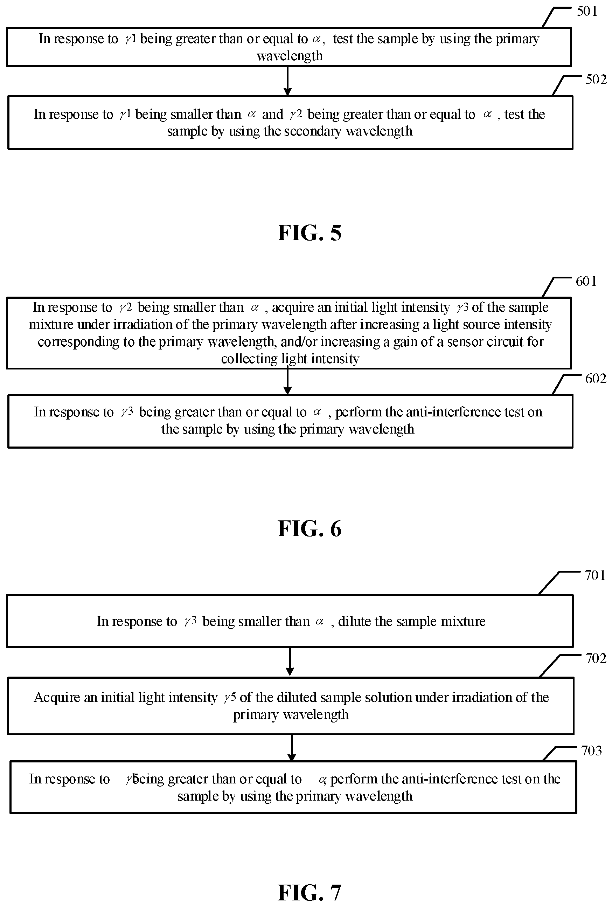

Based on the embodiment described in FIG. 4, S404 is described in detail below, referring to FIG. 5, which illustrates detailed steps of S404 of the embodiment in FIG. 4.

At 501, if *γ*1 is greater than or equal to *α ,* the sample is tested by using the primary wavelength.

If the initial light intensity of the primary wavelength is not less than the light intensity threshold value corresponding to the measurement item, that is, *γ*1 is greater than or equal to *α,* that is, when the item test is performed on the sample by using the primary wavelength, the light intensity that can be collected by the optical measurement part can be ensured to meet the requirement of the test items of the sample, then the sample is tested by using the primary wavelength, so as to ensure the accuracy of the measurement item result.

At 502, if *γ*1 is smaller than *α* and *γ*2 is greater than or equal to *α ,* the sample is tested by using the secondary wavelength.

If the initial light intensity of the primary wavelength is less than the light intensity threshold value corresponding to the measurement item, but the light intensity corresponding to the measurement item is not greater than the initial light intensity of the secondary wavelength, that is, *γ*1 is smaller than *α* and *γ*2 is greater than or equal to *α* , that is, when performing the item test on the sample by using the secondary wavelength, the light intensity that can be collected by the optical measurement part can be ensured to meet the requirement of the test items of the sample, then the sample is tested by using the secondary wavelength, so as to ensure the accuracy of the measurement item result.

In the embodiments of the disclosure, when performing the item test on the sample by using a plurality of wavelengths, how to implement the anti-interference test approach through wavelength switching is described in detail. When *γ*1 is greater than or equal to *α*, the sample is tested by using the primary wavelength; and when *γ*1 is smaller than *α* and *γ*2 is greater than or equal to *α,* the sample is tested by using the secondary wavelength, so that the accuracy of the item test result of the sample is improved.

Based on the embodiment described in FIG. 5, when the initial light intensity of the secondary wavelength is less than the light intensity corresponding to the measurement item, that is, *γ*2 is smaller than *α*, the following steps may be executed to realize anti-interference measurement of the sample. Specifically referring to FIG. 6, another embodiment of the anti-interference test method in the embodiments of the disclosure includes the following steps.

At 601, if *γ*2 is smaller than *α* , an initial light intensity *γ*3 of the sample mixture under irradiation of the primary wavelength is acquired after increasing the light source intensity corresponding to the primary wavelength, and/or increasing a gain of a sensor circuit for collecting the light intensity.

If the initial light intensity of the secondary wavelength is also less than the light intensity threshold value corresponding to the measurement item, that is, *γ*2 is smaller than *α*, the initial light intensity of the sample mixture under irradiation of the primary wavelength may be acquired again after increasing the light source intensity corresponding to the primary wavelength, and/or increasing the gain of a sensor circuit for collecting the light intensity *γ*3 ; and when *γ*3 is greater than or equal to *α,* the anti-interference test is performed on the sample by using the primary wavelength.

It is easy to understand that, in the embodiments of the disclosure, the sensitivity of an optical detector can be improved regardless of whether increasing the light source intensity corresponding to the primary wavelength, or increasing the gain of a sensor circuit for collecting the light intensity. No matter which mode is adopted, accurate measurement of the measurement item of the sample may be realized as long as the initial light intensity of the primary wavelength is ensured not to be less than the light intensity threshold value corresponding to the measurement item.

At 602, if *γ*3 is greater than or equal to *α*, anti-interference test is performed on the sample by using the primary wavelength.

After increasing the light source intensity corresponding to the primary wavelength, and/or increasing the gain of a sensor circuit for collecting the light intensity, as long as *γ*3 is greater than or equal to *α*, that is, the initial light intensity of the primary wavelength is not less than the light intensity threshold value corresponding to the measurement item, the anti-interference measurement may be performed on the sample by using the primary wavelength, so as to ensure the accuracy of the measurement item result of the sample.

In the embodiments of the disclosure, when the light intensity of the secondary wavelength is also less than the light intensity threshold value corresponding to the measurement item, a process of implementing anti-interference measurement of the sample is described in detail, and the accuracy of the item test result of the sample is improved.

Based on the embodiment described in FIG. 6, if the initial light intensity of the sample mixture under irradiation of the primary wavelength acquired again is still less than the light intensity threshold value corresponding to the measurement item after increasing the light source intensity corresponding to the primary wavelength, and/or increasing the gain of a sensor circuit for collecting the light intensity, that is, *γ*3 is smaller than *α*, the following steps may also be executed to realize accurate measurement of the test item of the sample. Specifically referring to FIG. 7, another embodiment of the anti-interference test method in the embodiments of the disclosure includes the following steps.

At 701, if *γ*3 is smaller than *α,* the sample mixture is diluted.

If the initial light intensity of the sample mixture under irradiation of the primary wavelength acquired again is still less than the light intensity threshold value corresponding to the measurement item after increasing the light source intensity corresponding to the primary wavelength, and/or increasing the gain of a sensor circuit for collecting the light intensity, that is, *γ*3 is smaller than *α*, the sample mixture may further be diluted, and S702 may be executed after the sample is diluted.

At 702, an initial light intensity *γ*5 of the diluted sample solution under irradiation of the primary wavelength is acquired.

The initial light intensity *γ*5 of the diluted sample mixture under irradiation of the primary wavelength is acquired again after the sample mixture is diluted, and S703 is executed when the acquired initial light intensity *γ*5 is not less than the light intensity threshold value *α* corresponding to the measurement item.

At 703, if *γ*5 is greater than or equal to *α*, anti-interference test is performed on the sample by using the primary wavelength.

If the acquired initial light intensity of the sample mixture under irradiation of the primary wavelength is not less than the light intensity threshold value corresponding to the measurement item after the sample mixture is diluted, that is, *γ*5 is greater than or equal to *α*, the anti-interference test may be performed on the sample by using the primary wavelength continuously, so as to realize accurate measurement of the test item of the sample.

In the embodiments of the disclosure, if the initial light intensity of the sample mixture under irradiation of the primary wavelength acquired again is still less than the light intensity threshold value corresponding to the measurement item after increasing the light source intensity corresponding to the primary wavelength, and/or increasing the gain of a sensor circuit for collecting the light intensity, that is, *γ*3 is smaller than *α,* how to realize a process of anti-interference measurement on the sample is described in detail, so that the accuracy of the test item result of the sample is further improved.

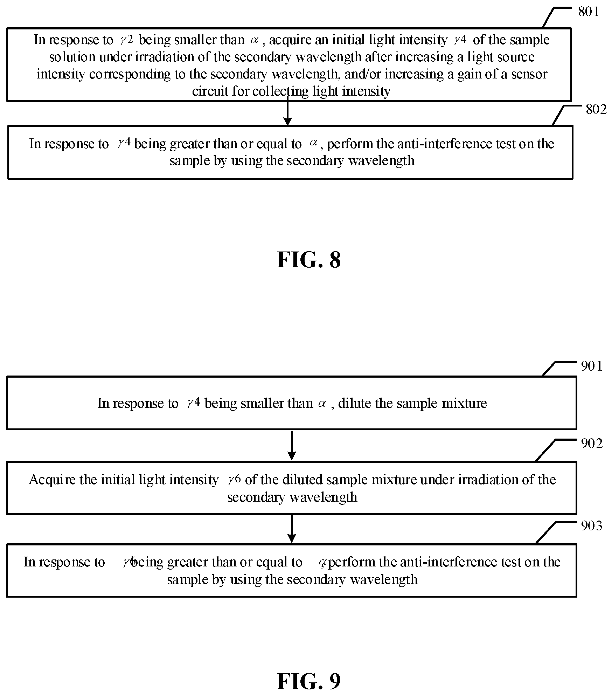

Based on the embodiment described in FIG. 5, when *γ*2 is smaller than *α ,* the following steps may also be executed, so as to realize anti-interference measurement of the sample. Referring to FIG. 8, another embodiment of the anti-interference measurement method in the embodiments of the disclosure includes the following steps.

At 801, if *γ*2 is smaller than *α*, an initial light intensity *γ*4 of the sample solution under irradiation of the secondary wavelength is acquired after increasing a light source intensity corresponding to the secondary wavelength, and/or increasing a gain of a sensor circuit for collecting the light intensity.

If the initial light intensity of the secondary wavelength is less than the light intensity threshold value corresponding to the measurement item, that is, *γ*2 is smaller than *α*, the initial light intensity *γ*4 of the sample mixture under irradiation of the secondary wavelength further may be acquired again after increasing the light source intensity corresponding to the secondary wavelength, and/or increasing the gain of a sensor circuit for collecting the light intensity; and when *γ*4 is greater than or equal to *α*, the anti-interference test is performed on the sample by using the secondary wavelength.

It is easy to understand that, in the embodiments of the disclosure, either increasing the light source intensity corresponding to the secondary wavelength or increasing the gain of the sensor circuit for collecting the light intensity is a mode to increase the initial light intensity of the secondary wavelength. No matter which mode is adopted, accurate measurement of the measurement item of the sample may be realized as long as the initial light intensity of the secondary wavelength is ensured not to be less than the light intensity threshold value corresponding to the measurement item.

At 802, if *γ*4 is greater than or equal to *α*, then anti-interference test is performed on the sample by using the secondary wavelength.

As long as *γ*4 is greater than or equal to *α*, that is, the initial light intensity of the secondary wavelength is not less than the light intensity threshold value corresponding to the measurement item after increasing a light source intensity corresponding to the secondary wavelength, and/or increasing a gain of a sensor circuit for collecting the light intensity, the anti-interference measurement may be performed on the sample by using the secondary wavelength, so as to ensure the accuracy of the measurement item result of the sample.

In the embodiments of the disclosure, when the initial light intensity of the secondary wavelength is less than the light intensity threshold value corresponding to the measurement item, how to realize a process of the anti-interference measurement of the sample is described in detail, and the accuracy of the item test result of the sample is improved.

It is to be noted that FIG. 6 and FIG. 8 are two optional embodiments. Since the primary wavelength can better characterize a reaction process between a sample and a reagent, the embodiment of FIG. 6 is a more preferred embodiment compared with the embodiment of FIG. 8.

Based on the embodiment described in FIG. 8, if the initial light intensity of the sample mixture under irradiation of the secondary wavelength acquired again is still less than the light intensity threshold value corresponding to the measurement item after increasing the light source intensity corresponding to the secondary wavelength, and/or increasing the gain of a sensor circuit for collecting the light intensity, that is, *γ*4 is smaller than *α*, the following steps may also be executed to realize accurate measurement of the test item of the sample. Specifically referring to FIG. 9, another embodiment of the anti-interference test method in the embodiments of the disclosure includes the following steps.

At 901, if *γ*4 is smaller than *α,* the sample mixture is diluted.

If the initial light intensity of the sample mixture under irradiation of the secondary wavelength acquired again is still less than the light intensity threshold value corresponding to the measurement item after increasing the light source intensity corresponding to the secondary wavelength, and/or increasing the gain of a sensor circuit for collecting the light intensity, that is, *γ*4 is smaller than *α,* the sample mixture may further be diluted, and S902 is executed after the sample is diluted.

At 902, the initial light intensity of the diluted sample mixture under the irradiation of the secondary wavelength is acquired.

The initial light intensity *γ*6 of the diluted sample mixture under the irradiation of the secondary wavelength is acquired again after the sample mixture is diluted, and S903 is executed when the acquired initial light intensity *γ*6 is not less than the light intensity threshold value *α* corresponding to the measurement item.

At 903, if *γ*6 is greater than or equal to *α*, then anti-interference test is performed on the sample by using the secondary wavelength.

If the acquired initial light intensity of the sample mixture under the irradiation of the secondary wavelength is not less than the light intensity threshold value corresponding to the measurement item after the sample mixture is diluted, that is, *γ*6 is greater than or equal to *α ,* the anti-interference test may be performed on the sample by using the secondary wavelength continuously, so as to realize accurate measurement of the test item of the sample.

In the embodiments of the disclosure, if the initial light intensity of the sample mixture under the irradiation of the secondary wavelength acquired again is still less than the light intensity threshold value corresponding to the measurement item after increasing the light source intensity corresponding to the secondary wavelength, and/or increasing the gain of a sensor circuit for collecting the light intensity, that is, *γ*4 is smaller than *α*, how to realize a process of anti-interference measurement on the sample is described in detail, so that the accuracy of the test item result of the sample is further improved.

In the embodiments above, the anti-interference test method when item test is performed on the sample by using a plurality of wavelengths is described in detail. The anti-interference test method for a test item which cannot switch the wavelength (that is, using a single wavelength) is described, such as an anti-interference test method of a chromogenic substrate method. There is only a single threshold value for single-wavelength anti-interference, i.e., an anti-interference threshold value for the primary wavelength.

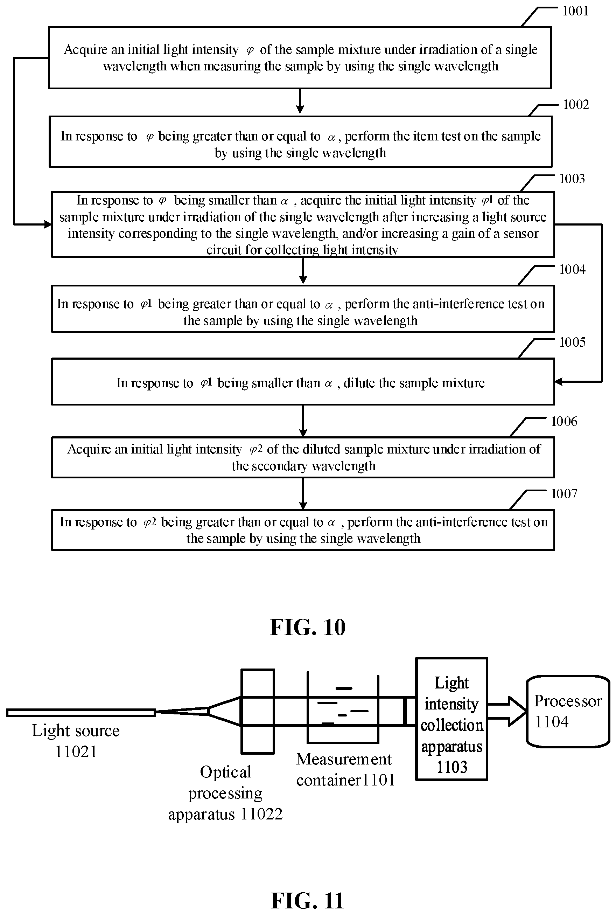

Specifically, referring to FIG. 10, which is present for illustration purpose and is not part of the present invention, another embodiment of the anti-interference test method includes the following steps.

At 1001, an initial light intensity *φ* of the sample mixture under irradiation of a single wavelength is acquired when the sample is measured by using the single wavelength.

When the sample is measured by the single wavelength, an initial light intensity *φ* of the sample mixture under the irradiation of the single wavelength is correspondingly acquired, and the following steps are executed according to the relationship between the single-wavelength initial light intensity and the light intensity corresponding to the measurement item.

At 1002, if *φ* is greater than or equal to *α*, item test is performed on the sample by using the single wavelength.

If the initial light intensity of the single wavelength is not less than the light intensity corresponding to the measurement item, that is, *φ* is greater than or equal to *α* , that is, when the item test is performed on the sample by using the single wavelength, the light intensity that can be collected by the optical measurement part can be ensured to meet the requirement of a test item of the sample, then the sample is tested by using the single wavelength, so as to ensure the accuracy of the measurement item result.

At 1003, if *φ* is smaller than *α*, an initial light intensity *φ*1 of the sample mixture under irradiation of the single wavelength is acquired after increasing the light source intensity corresponding to the single wavelength, and/or increasing the gain of a sensor circuit for collecting the light intensity.

If the initial light intensity of the single wavelength is less than the light intensity corresponding to the measurement item, that is, *φ* is smaller than *α ,* the initial light intensity *φ*1 of the sample mixture under irradiation of the single wavelength is acquired again after increasing the light source intensity corresponding to the single wavelength, and/or increasing the gain of a sensor circuit for collecting the light intensity, and the following steps are executed according to a relationship between the initial light intensity *φ*1 and the light intensity *α* corresponding to the measurement item.

At 1004, if *φ*1 is greater than or equal to *α*, then anti-interference test is performed on the sample by using the single wavelength.

If the initial light intensity of the sample mixture under irradiation of the single wavelength acquired again is not less than the light intensity threshold value corresponding to the measurement item after increasing the light source intensity corresponding to the single wavelength, and/or increasing the gain of a sensor circuit for collecting the light intensity, that is, *φ*1 is greater than or equal to *α*, the anti-interference test may be performed on the sample by using the single wavelength, so as to ensure accurate measurement of the test item of the sample.

At 1005, if *φ*1 is smaller than *α,* the sample mixture is diluted.

If the initial light intensity of the sample mixture under the irradiation of the single wavelength acquired again is still less than the light intensity threshold value corresponding to the measurement item after increasing the light source intensity corresponding to the single wavelength, and/or increasing the gain of a sensor circuit for collecting the light intensity, that is, *φ*1 is smaller than *α*, the sample mixture is diluted continuously, and S1006 is executed after the diluting is completed.

At 1006, the initial light intensity *φ*2 of the diluted sample mixture under irradiation of the secondary wavelength is acquired.

The initial light intensity *φ*2 of the diluted sample mixture under irradiation of the single wavelength is acquired after the sample mixture is diluted, and S1007 is executed according to the relationship between *φ*2 and the light intensity *α* corresponding to the measurement item.

At 1007, if *φ*2 is greater than or equal to *α*, then anti-interference test is performed on the sample by using the single wavelength.

If the initial light intensity of the diluted sample mixture under irradiation of the single wavelength is not less than the light intensity threshold value corresponding to the measurement item, that is, the light intensity of the single wavelength may ensure the light intensity collected by the optical measurement part, then the anti-interference test is performed on the sample by using the single wavelength, so as to ensure the accuracy of the test item results of the sample.

In the embodiments of the disclosure, the anti-interference test method for the test items that cannot switch the wavelength (that is, using a single wavelength) is described in detail, so as to improve the accuracy of the results of the single-wavelength test items of the sample.

The anti-interference test method in the embodiments of the disclosure is described in detail above. Then, a sample analyzer in the embodiments of the disclosure is described in detail. Referring to FIG. 11, an embodiment of the sample analyzer in the embodiments of the disclosure includes a measurement container 1101, an optical apparatus 1102, a light intensity collection apparatus 1103, and a processor 1104.

The measurement container 1101 is configured to carry a mixture of a sample and a reagent for performing item measurement.

The optical apparatus 1102 is configured to provide multi-wavelength light and irradiate the mixture by using the multi-wavelength light through a multi-wavelength light source 11021 and an optical processing apparatus 11022. Here, the multi-wavelength light includes a primary wavelength and a secondary wavelength corresponding to a measurement item of the sample.

The light intensity collecting apparatus 1103 is configured to acquire initial light intensities *γ*1 and *γ*2 of the sample mixture under irradiation of the primary wavelength and the secondary wavelength respectively.

The processor 1104 is configured to:
acquire a light intensity threshold value *α* corresponding to the measurement item; and
perform an anti-interference test approach on the sample according to comparison results of *γ*1 and *γ*2 with *α.*

Preferably, the processor 1104 is specifically configured to:
if *γ*1 is greater than or equal to *α*, test the sample by using the primary wavelength; and
if *γ*1 is smaller than *α* ≤ *γ*2, test the sample by using the secondary wavelength.

Preferably, the processor 1104 is further configured to:
if *γ*1 is smaller than *α*, acquire an initial light intensity *γ*3 of the sample mixture under irradiation of the primary wavelength after increasing a light source intensity corresponding to the primary wavelength, and/or increasing a gain of a sensor circuit for collecting the light intensity; and
if *γ*3 is greater than or equal to *α*, perform anti-interference test on the sample by using the primary wavelength.

Preferably, the processor 1104 is further configured to:
if *γ*2 is smaller than *α*, acquire an initial light intensity *γ*4 of the sample solution under irradiation of the secondary wavelength after increasing a light source intensity corresponding to the secondary wavelength, and/or increasing a gain of a sensor circuit for collecting the light intensity; and
if *γ*4 is greater than or equal to *α*, perform anti-interference test on the sample by using the secondary wavelength.

Preferably, the processor 1104 is further configured to:
if *γ*3 is smaller than *α,* dilute the sample mixture;
acquire an initial light intensity *γ*5 of the diluted sample solution under irradiation of the primary wavelength; and
if *γ*5 is greater than or equal to *α*, perform anti-interference test on the sample by using the primary wavelength.

Preferably, the processor 1104 is further configured to:
if *γ*4 is smaller than *α,* dilute the sample mixture;
acquire an initial light intensity *γ*6 of the diluted sample solution under the irradiation of the secondary wavelength; and
if *γ*6 is greater than or equal to *α*, perform anti-interference test on the sample by using the secondary wavelength.

Preferably, the processor 1104 is further configured to:
acquire an initial light intensity *φ* of the sample mixture under irradiation of a single wavelength when the sample is measured by using the single wavelength; and
if *φ* is greater than or equal to *α ,* perform item test on the sample by using the single wavelength.

Preferably, the processor 1104 is further configured to:
if *φ* is smaller than *α*, acquire an initial light intensity *φ*1 of the sample mixture under irradiation of the single wavelength after increasing a light source intensity corresponding to the single wavelength, and/or increasing a gain of a sensor circuit for collecting the light intensity; and
if *φ*1 is greater than or equal to *α*, perform anti-interference test on the sample by using the single wavelength.

Preferably, the processor 1104 is further configured to:
if *φ*1 is smaller than *α*, dilute the sample mixture;
acquire an initial light intensity *φ*2 of the diluted sample solution under irradiation of the single wavelength; and
if *φ*2 is greater than or equal to *α ,* perform anti-interference test on the sample by using the single wavelength.

It is to be noted that the functions of various apparatuses in the present embodiment are similar to those described in the embodiments of FIG. 4 to FIG.10, which will not be elaborated herein.

In the technical solution provided by the embodiments of the disclosure, a reagent for performing item test is added to a sample in the measurement container 1101 and is mixed uniformly to obtain a sample mixture; the sample mixture is irradiated by using multi-wavelength light provided by the multi-wavelength light source 11021 and an optical processing apparatus 11022, herein the multi-wavelength light includes a primary wavelength and a secondary wavelength corresponding to a measurement item of the sample; the initial light intensity *γ*1 of the primary wavelength, the initial light intensity *γ*2 of the secondary wavelength, and a light intensity threshold value *α* corresponding to the measurement item are acquired through the light intensity collection apparatus 1103 and the processor 1104. The anti-interference test method is performed on the sample according to comparison results of *γ*1 and *γ*2 with *α*. Therefore, the anti-interference measurement of the sample is realized without pre-test of sample interference.

In addition, when the sample analyzer performs coagulation item tests, the sample analyzer is a coagulation analyzer. Structural parts and a working principle of the coagulation analyzer may refer to the embodiments described in FIG. 4 to FIG. 10, which will not be elaborated herein.

An embodiment of the disclosure further provides a computer-readable storage medium. The computer-readable storage medium is configured to realize the functions of the sample analyzer, which stores a computer program thereon. When the computer program is executed by a processor, the processor may be configured to execute the following steps.

A reagent for performing item test is added to a sample and is mixed uniformly to obtain a sample mixture.

The sample mixture is irradiated by using multi-wavelength light, herein the multi-wavelength light may include a primary wavelength and a secondary wavelength corresponding to a measurement item of the sample.

An initial light intensity *γ*1 of the primary wavelength, an initial light intensity *γ*2 of the secondary wavelength, and a light intensity threshold value *α* corresponding to the measurement item are acquired.

An anti-interference test approach is performed on the sample according to comparison results of *γ*1 and *γ*2 with *α.*

In some embodiments of the disclosure, when the computer program stored in the computer-readable storage medium is executed by the processor, the processor may also execute the following steps.

In response to *γ*1 being greater than or equal to *α*, the sample is tested by using the primary wavelength.

In response to *γ*1 being smaller than *α*, and *γ*2 being greater than or equal to *α*, the sample is tested by using the secondary wavelength.

In some embodiments of the disclosure, when the computer program stored in the computer-readable storage medium is executed by the processor, the processor may also execute the following steps.

In response to *γ*2 being smaller than *α*, an initial light intensity *γ*3 of the sample mixture under the irradiation of the primary wavelength is acquired after increasing the light source intensity corresponding to the primary wavelength, and/or increasing the gain of a sensor circuit for collecting the light intensity.

In response to *γ*3 being greater than or equal to *α*, anti-interference test is performed on the sample by using the primary wavelength.

In some embodiments of the disclosure, when the computer program stored in the computer-readable storage medium is executed by the processor, the processor may also execute the following steps.

In response to *γ*2 being smaller than *α*, an initial light intensity *γ*4 of the sample mixture under the irradiation of the secondary wavelength is acquired after increasing a light source intensity corresponding to the secondary wavelength, and/or increasing a gain of a sensor circuit for collecting the light intensity.

In response to *γ*4 being greater than or equal to *α*, anti-interference test is performed on the sample by using the secondary wavelength.

In some embodiments of the disclosure, when the computer program stored in the computer-readable storage medium is executed by the processor, the processor may also execute the following steps.

In response to *γ*4 being greater than or equal to *α*, the sample mixture is diluted.

An initial light intensity *γ*5 of the diluted sample solution under the irradiation of the primary wavelength is acquired.

In response to *γ*5 being greater than or equal to *α*, anti-interference test is performed on the sample by using the primary wavelength.

In some embodiments of the disclosure, when the computer program stored in the computer-readable storage medium is executed by the processor, the processor may also execute the following steps.

In response to *γ*4 being smaller than *α,* the sample mixture is diluted.

An initial light intensity *γ*6 of the diluted sample solution under irradiation of the secondary wavelength is acquired.

In response to *γ*6 being greater than or equal to *α*, anti-interference test is performed on the sample by using the secondary wavelength.

In some embodiments of the disclosure, when the computer program stored in the computer-readable storage medium is executed by the processor, the processor may also execute the following steps.

An initial light intensity *φ* of the sample mixture under irradiation of a single wavelength is acquired when the sample is measured by using the single wavelength.

In response to *φ* being greater than or equal to *α*, item test is performed on the sample by using the single wavelength.

In some embodiments of the disclosure, when the computer program stored in the computer-readable storage medium is executed by the processor, the processor may also execute the following steps.

In response to *φ* being smaller than *α*, an initial light intensity *φ*1 of the sample mixture under the irradiation of the single wavelength is acquired after increasing the light source intensity corresponding to the single wavelength, and/or increasing the gain of a sensor circuit for collecting the light intensity.

In response to *φ*1 being greater than or equal to *α*, anti-interference test is performed on the sample by using the single wavelength.

In some embodiments of the disclosure, when the computer program stored in the computer-readable storage medium is executed by the processor, the processor may also execute the following steps.

In response to *φ*1 being smaller than *α,* the sample mixture is diluted.

An initial light intensity *φ*2 of the diluted sample solution under irradiation of the single wavelength is acquired.

In response to *φ*2 being greater than or equal to *α*, anti-interference test is performed on the sample by using the single wavelength.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the disclosure, it should be understood that the disclosed system, apparatus, and method may be implemented in other modes. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of the disclosure may be integrated into one processing unit, or each of the units may exist alone physically, or two or more units may be integrated into one unit. The abovementioned integrated unit may be implemented in a hardware form and may also be implemented in form of software functional unit.

The integrated unit may be stored in a computer-readable storage medium if being implemented in the form of a software functional unit and sold or used as a standalone product. Based on such an understanding, the technical solutions of the disclosure essentially, or the part contributing to the prior art, or all or part of the technical solutions may be implemented in a form of a software product. The computer software product is stored in a storage medium, and includes a plurality of instructions for instructing a computer device (which may be a personal computer, a server, a network device, etc.) to execute all or part of the steps of the methods in various embodiments of the disclosure. The foregoing storage medium includes: various media that may store program codes, such as a USB Flash Drive, a mobile hard disk drive, a Read-Only Memory (ROM), a Random Access Memory (RAM), a magnetic disk, or an optical disk.

The foregoing embodiments are merely intended to describe the technical solutions of the disclosure, but not to limit the disclosure. Although the disclosure is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the disclosure.

## Claims

1. An anti-interference test method, comprising:
adding (401) a reagent for performing an item test on a sample and mixing uniformly to obtain a sample mixture;
irradiating (402) the sample mixture by using multi-wavelength light, wherein the multi-wavelength light comprises a primary wavelength and a secondary wavelength corresponding to the item test of the sample;
acquiring (403) an initial light intensity *γ*1 of the primary wavelength light transmitted by the sample, an initial light intensity *γ*2 of the secondary wavelength light transmitted by the sample, and a light intensity threshold value *α* corresponding to the item test; and
performing (404) an anti-interference test on the sample according to comparison results of *γ*1 and *γ*2 with *α*,
wherein performing an anti-interference test on the sample according to comparison results of *γ*1 and *γ*2 with *α* comprises:
in response to *γ*1 being greater than or equal to *α* determining the result of the item test on the sample by using the primary wavelength; and
in response to *γ*1 being smaller than *α*, and *γ*2 being greater than or equal to *α,* determining the result of the item test on the sample by using the secondary wavelength,
wherein performing (404) an anti-interference test on the sample according to comparison results of *γ*1 and *γ*2 with *α* further comprises:
in response to *γ*2 being smaller than *α*, acquiring (601) an initial transmitted light intensity *γ*3 of the sample mixture under irradiation of the primary wavelength after increasing at least one of a light source intensity corresponding to the primary wavelength and a gain of a sensor circuit for collecting the transmitted light intensity; and
in response to *γ*3 being greater than or equal to *α ,* determining the result of the item test on the sample by using the primary wavelength.

2. An anti-interference test method, comprising:
adding (401) a reagent for performing an item test on a sample and mixing uniformly to obtain a sample mixture;
irradiating (402) the sample mixture by using multi-wavelength light, wherein the multi-wavelength light comprises a primary wavelength and a secondary wavelength corresponding to the item test of the sample;
acquiring (403) an initial light intensity *γ*1 of the primary wavelength light transmitted by the sample, an initial light intensity *γ*2 of the secondary wavelength light transmitted by the sample, and a light intensity threshold value *α* corresponding to the item test; and
performing (404) an anti-interference test on the sample according to comparison results of *γ*1 and *γ*2 with *α,*
wherein performing an anti-interference test on the sample according to comparison results of *γ*1 and *γ*2 with *α* comprises:
in response to *γ*1 being greater than or equal to *α*, determining the result of the item test on the sample by using the primary wavelength; and
in response to *γ*1 being smaller than *α,* and *γ*2 being greater than or equal to *α,* determining the result of the item test on the sample by using the secondary wavelength,
wherein performing (404) an anti-interference test on the sample according to comparison results of *γ*1 and *γ*2 with *α* further comprises:
in response to *γ*2 being smaller than *α*, acquiring (801) an initial transmitted light intensity *γ*4 of the sample mixture under irradiation of the secondary wavelength after increasing at least one of a light source intensity corresponding to the secondary wavelength and a gain of a sensor circuit for collecting the transmitted light intensity; and
in response to *γ*4 being greater than or equal to *α* determining the result of the item test on the sample by using the secondary wavelength.

3. The method of claim 1, further comprising:
in response to *γ*3 being smaller than *α*, diluting (701) the sample mixture;
acquiring (702) an initial light intensity *γ*5 of the diluted sample mixture under irradiation of the primary wavelength; and
in response to *γ*5 being greater than or equal to *α*, performing (703) the anti-interference test on the sample by using the primary wavelength.

4. The method of claim 2, further comprising:
in response to *γ*4 being smaller than *α*, diluting (901) the sample mixture;
acquiring (902) an initial light intensity *γ*6 of the diluted sample mixture under irradiation of the secondary wavelength; and
in response to *γ*6 being greater than or equal to *α*, performing (903) the anti-interference test on the sample by using the secondary wavelength.

5. A sample analyzer, comprising:
a measurement container (1101), configured to carry a mixture of a sample and a reagent for performing an item test;
an optical apparatus (1102), configured to provide multi-wavelength light and irradiate the mixture by using the multi-wavelength light, wherein the multi-wavelength light comprises a primary wavelength and a secondary wavelength corresponding to the item test of the sample;
a light intensity collecting apparatus (1103), configured to acquire initial light intensities *γ*1 and *γ*2 transmitted by the sample mixture under irradiation of the primary wavelength and the secondary wavelength respectively;
a processor (1104), configured to:
acquire a light intensity threshold value *α* corresponding to the item test; and
perform an anti-interference test on the sample according to comparison results of *γ*1 and *γ*2 with *α*,
wherein the processor (1104) is configured to:
in response to *γ*1 being greater than or equal to *α* determine the result of the item test on the sample by using the primary wavelength; and
in response to *γ*1 being smaller than *α*, and *γ*2 being greater than or equal to *α* determine the result of the item test on the sample by using the secondary wavelength,
wherein the processor (1104) is further configured to:
in response to *γ*2 being smaller than *α ,* acquire an initial transmitted light intensity *γ*3 of the sample mixture under irradiation of the primary wavelength after increasing at least one of a light source intensity corresponding to the primary wavelength and a gain of a sensor circuit for collecting the transmitted light intensity; and
in response to *γ*3 being greater than or equal to *α*, determine the result of the item test on the sample by using the primary wavelength.

6. A sample analyzer, comprising:
a measurement container (1101), configured to carry a mixture of a sample and a reagent for performing an item test;
an optical apparatus (1102), configured to provide multi-wavelength light and irradiate the mixture by using the multi-wavelength light, wherein the multi-wavelength light comprises a primary wavelength and a secondary wavelength corresponding to the item test of the sample;
a light intensity collecting apparatus (1103), configured to acquire initial light intensities *γ*1 and *γ*2 transmitted by the sample mixture under irradiation of the primary wavelength and the secondary wavelength respectively;
a processor (1104), configured to:
acquire a light intensity threshold value *α* corresponding to the item test; and
perform an anti-interference test on the sample according to comparison results of *γ*1 and *γ*2 with *α,*
wherein the processor (1104) is configured to:
in response to *γ*1 being greater than or equal to *α*, determine the result of the item test on the sample by using the primary wavelength; and
in response to *γ*1 being smaller than *α ,* and *γ*2 being greater than or equal to *α* determine the result of the item test on the sample by using the secondary wavelength,
wherein the processor (1104) is further configured to:
in response to *γ*2 being smaller than *α ,* acquire an initial light intensity *γ*4 transmitted by the sample mixture under irradiation of the secondary wavelength after increasing at least one of a light source intensity corresponding to the secondary wavelength and increasing a gain of a sensor circuit for collecting the transmitted light intensity; and
in response to *γ*4 being greater than or equal to *α*, determine the result of the item test on the sample by using the secondary wavelength.

7. The sample analyzer of claim 5, wherein the processor (1104) is further configured to:
in response to *γ*3 being smaller than *α*, dilute the sample mixture;
acquire the initial light intensity *γ*5 of the diluted sample mixture under irradiation of the primary wavelength; and
in response to *γ*5 being greater than or equal to *α*, perform the anti-interference test on the sample by using the primary wavelength.

8. The sample analyzer of claim 6, wherein the processor is further configured to:
in response to *γ*4 being smaller than *α*, dilute the sample mixture;
acquire an initial light intensity *γ*6 of the diluted sample mixture under irradiation of the secondary wavelength; and
in response to γ6 being greater than or equal to *α ,* perform the anti-interference test on the sample by using the secondary wavelength.

9. The sample analyzer of any one of claims 5 to 8, wherein the sample analyzer is a coagulation analyzer.

## Patentansprüche

1. Ein Testverfahren zur Störfestigkeit, das Folgendes umfasst:
Hinzufügen (401) eines Reagens für die Durchführung eines Testes an einer Probe und gleichmäßiges Mischen, um eine Probenmischung zu erhalten;
Bestrahlung (402) der Probenmischung unter Verwendung von Licht mit mehreren Wellenlängen, wobei die Lichtwellenlängen eine primäre Wellenlänge und eine sekundäre Wellenlänge umfassen, entsprechend dem Produkttest der Probe;
Erfassen (403) einer anfänglichen Lichtintensität γ1 der durch die Probe übertragenen primären Wellenlänge, einer anfänglichen Lichtintensität γ2 der durch die Probe übertragenen sekundären Wellenlänge sowie eines Schwellenwertes α der Lichtintensität, entsprechend dem Produkttest der Probe; und
Durchführen (404) eines auf dem Vergleich der Ergebnisse von γ1 und γ2 mit α basierenden Testverfahrens zur Störfestigkeit, der Folgendes umfasst:
Bei γ1 ≥ α: Bestimmen des Testergebnisses des Produkttests der Probe unter Verwendung der primären Wellenlänge; und
Bei γ1 < α und γ2 ≥ α: Bestimmen des Testergebnisses des Produkttests der Probe unter Verwendung der sekundären Wellenlänge,
wobei das Durchführen (404) eines auf dem Vergleich der Ergebnisse von γ1 und γ2 mit α basierenden Testverfahrens zur Störfestigkeit ferner Folgendes umfasst:
Bei γ2 < α: Erfassen (601) einer anfänglichen Intensität des übertragenen Lichts γ3 der Probenmischung unter Bestrahlung mit der primären Wellenlänge nach Steigerung der Intensität mindestens einer Lichtquelle, die der primären Wellenlänge entspricht sowie einer Verstärkung einer Sensorschaltung zur Erfassung der übertragenen Lichtintensität; und
Bei γ3 ≥ α: Bestimmen des Testergebnisses des Produkttests der Probe unter Verwendung der primären Wellenlänge.

2. Ein Testverfahren zur Störfestigkeit, das Folgendes umfasst:
Hinzufügen (401) eines Reagens für die Durchführung eines Testes an einer Probe und gleichmäßiges Mischen, um eine Probenmischung zu erhalten;
Bestrahlung (402) der Probenmischung unter Verwendung von Licht mit mehreren Wellenlängen, wobei die Lichtwellenlängen eine Primärwellenlänge und eine Sekundärwellenlänge umfassen, entsprechend dem Produkttest der Probe;
Erfassen (403) einer anfänglichen Lichtintensität γ1 der durch die Probe übertragenen primären Wellenlänge, einer anfänglichen Lichtintensität γ2 der durch die Probe übertragenen sekundären Wellenlänge sowie eines Schwellenwertes α der Lichtintensität, entsprechend dem Produkttest der Probe; und
Durchführen (404) eines auf dem Vergleich der Ergebnisse von γ1 und γ2 mit α basierenden Testverfahrens zur Störfestigkeit, der Folgendes umfasst:
Bei γ1 ≥ α: Bestimmen des Testergebnisses des Produkttests der Probe unter Verwendung der primären Wellenlänge; und
Bei γ1 < α und γ2 ≥ α: Bestimmen des Testergebnisses des Produkttests der Probe unter Verwendung der sekundären Wellenlänge,
wobei das Durchführen (404) eines auf dem Vergleich der Ergebnisse von γ1 und γ2 mit *α* basierenden Testverfahrens zur Störfestigkeit ferner Folgendes umfasst:
Bei γ2 < *α* ist: Erfassen (801) einer anfänglichen Intensität des übertragenen Lichts γ4 der Probenmischung unter Bestrahlung mit der sekundären Wellenlänge nach Steigerung der Intensität mindestens einer Lichtquelle, die der sekundären Wellenlänge entspricht sowie einer Verstärkung einer Sensorschaltung zur Erfassung der übertragenen Lichtintensität; und
Bei γ4 ≥ α: Bestimmen des Testergebnisses des Produkttests der Probe unter Verwendung der sekundären Wellenlänge.

3. Das Verfahren nach Anspruch 1 umfasst ferner Folgendes:
Bei γ3 < α: Verdünnen (701) der Probenmischung;
Erfassen (702) einer anfänglichen Lichtintensität γ5 der verdünnten Probenmischung unter Bestrahlung mit der primären Wellenlänge; und
bei γ5 ≥ α: Durchführen (703) des Testverfahrens zur Störfestigkeit an der Probe unter Verwendung der primären Wellenlänge.

4. Das Verfahren nach Anspruch 2 umfasst ferner Folgendes:
Bei γ4 < α: Verdünnen (901) der Probenmischung;
Erfassen (902) einer anfänglichen Lichtintensität γ6 der verdünnten Probenmischung unter Bestrahlung mit der sekundären Wellenlänge; und
Bei γ6 ≥ α: Durchführen (903) des Testverfahrens zur Störfestigkeit an der Probe unter Verwendung der sekundären Wellenlänge.

5. Probenanalysegerät mit:
einem Messbehälter (1101), konfiguriert, um eine Probenmischung und ein Reagens zur Durchführung eines Produkttests aufzunehmen;
einem optischen Gerät (1102), konfiguriert, um Licht mit mehreren Wellenlängen bereitzustellen und die Mischung damit zu bestrahlen, wobei die Lichtwellenlängen eine primäre und eine sekundäre Wellenlänge umfassen, entsprechend dem Produkttest der Probe;
einer Vorrichtung zur Erfassung der Lichtintensität (1103), konfiguriert zur Erfassung der anfänglichen Lichtintensitäten γ1 und γ2, die von der Probenmischung unter Bestrahlung mit der primären bzw. sekundären Wellenlänge übertragen werden;
einem Prozessor (1104), konfiguriert, um:
einen Schwellenwert α der Lichtintensität, der dem Testgegenstand entspricht, zu erfassen; und
ein Testverfahren zur Störfestigkeit an der Probe entsprechend den Vergleichsergebnissen von γ1 und γ2 mit α durchzuführen,
und ferner:
Bei γ1 ≥ α: das Testergebnis der Probe unter Verwendung der primären Wellenlänge zu bestimmen; und bei γ1 < α und γ2 ≥ α ist: das Testergebnis der Probe unter Verwendung der sekundären Wellenlänge zu bestimmen;
und:
Bei γ2 < α: eine anfängliche übertragene Lichtintensität γ3 der Probenmischung unter Bestrahlung mit der primären Wellenlänge nach einer Erhöhung mindestens einer Lichtquellenintensität, die der primären Wellenlänge entspricht, sowie einer Verstärkung einer Sensorschaltung zur Erfassung der übertragenen Lichtintensität zu erfassen; und
bei γ3 ≥ α: das Testergebnis der Probe unter Verwendung der primären Wellenlänge zu bestimmen.

6. Probenanalysegerät mit:
einem Messbehälter (1101), konfiguriert, um eine Probenmischung und ein Reagens zur Durchführung eines Produkttests aufzunehmen;
einem optischen Gerät (1102), konfiguriert, um Licht mit mehreren Wellenlängen bereitzustellen und die Mischung damit zu bestrahlen, wobei die Lichtwellenlängen eine primäre und eine sekundäre Wellenlänge umfassen, entsprechend dem Produkttest der Probe;
einer Vorrichtung zur Erfassung der Lichtintensität (1103), konfiguriert zur Erfassung der anfänglichen Lichtintensitäten γ1 und γ2, die von der Probenmischung unter Bestrahlung mit der primären bzw. sekundären Wellenlänge übertragen werden;
einen Prozessor (1104), konfiguriert, um:
einen Schwellenwert α der Lichtintensität, der dem Testgegenstand entspricht, zu erfassen; und
ein Testverfahren zur Störfestigkeit an der Probe entsprechend den Vergleichsergebnissen von γ1 und γ2 mit α durchzuführen,
und ferner:
Bei γ1 ≥ α: das Testergebnis der Probe unter Verwendung der primären Wellenlänge zu bestimmen; und bei γ1 < α und γ2 ≥ α ist: das Testergebnis der Probe unter Verwendung der sekundären Wellenlänge zu bestimmen; und
wobei der Prozessor (1104) ferner konfiguriert ist, um:
bei γ2 < α, eine anfängliche übertragene Lichtintensität γ4 der Probenmischung unter Bestrahlung mit der sekundären Wellenlänge nach einer Erhöhung mindestens einer Lichtquellenintensität, die der sekundären Wellenlänge entspricht, sowie einer Verstärkung einer Sensorschaltung zur Erfassung der übertragenen Lichtintensität zu erfassen; und
bei γ4 ≥ α, das Testergebnis der Probe unter Verwendung der sekundären Wellenlänge zu bestimmen.

7. Probenanalysegerät nach Anspruch 5, wobei der Prozessor (1104) ferner wiefolgt konfiguriert:
Bei γ3 < α: Verdünnen der Probenmischung;
Erfassen einer anfänglichen Lichtintensität γ5 der verdünnten Probenmischung unter Bestrahlung mit der primären Wellenlänge; und
Bei γ5 ≥ α: Durchführen des Testverfahrens zur Störfestigkeit an der Probe unter Verwendung der primären Wellenlänge.

8. Probenanalysegerät nach Anspruch 6, wobei der Prozessor ferner wiefolgt konfiguriert ist:
Bei γ4 < α: Verdünnen der Probenmischung;
Erfassen einer anfänglichen Lichtintensität γ6 der verdünnten Probenmischung unter Bestrahlung mit der sekundären Wellenlänge; und
Bei γ6 ≥ α: Durchführen des Testverfahrens zur Störfestigkeit an der Probe unter Verwendung der sekundären Wellenlänge.

9. Probenanalysegerät nach einem der Ansprüche 5 - 8, wobei es sich dabei um ein Gerät zur Messung der Gerinnung handelt.

## Revendications

1. Procédé de test anti-interférence, comprenant les étapes consistant à :
ajouter (401) un réactif destiné à réaliser un test d'élément sur un échantillon et mélanger uniformément pour obtenir un mélange échantillon ;
irradier (402) le mélange échantillon en utilisant une lumière multi-longueur d'onde, où la lumière multi-longueur d'onde comprend une longueur d'onde principale et une longueur d'onde secondaire correspondant au test d'élément de l'échantillon ;
acquérir (403) une intensité lumineuse initiale γ1 de la lumière de longueur d'onde principale transmise par l'échantillon, une intensité lumineuse initiale γ2 de la lumière de longueur d'onde secondaire transmise par l'échantillon, et une valeur de seuil d'intensité lumineuse α correspondant au test d'élément ; et
réaliser (404) un test anti-interférence sur l'échantillon selon des résultats de comparaison de γ1 et γ2 avec α,
où le fait de réaliser un test anti-interférence sur l'échantillon selon des résultats de comparaison de γ1 et γ2 avec α comprend :
en réponse à γ1 qui est supérieure ou égale à α, déterminer le résultat du test d'élément sur l'échantillon en utilisant la longueur d'onde principale ; et
en réponse à γ1 qui est inférieure à α, et γ2 qui est supérieure ou égale à α, déterminer le résultat du test d'élément sur l'échantillon en utilisant la longueur d'onde secondaire,
où le fait de réaliser (404) un test anti-interférence sur l'échantillon selon des résultats de comparaison de γ1 et γ2 avec α comprend en outre :
en réponse à γ2 qui est inférieure à α, acquérir (601) une intensité lumineuse transmise initiale γ3 du mélange échantillon sous irradiation de la longueur d'onde principale après augmentation d'au moins un d'une intensité de source de lumière correspondant à la longueur d'onde principale et d'un gain d'un circuit de capteur destiné à collecter l'intensité lumineuse transmise ; et
en réponse à γ3 qui est supérieure ou égale à α, déterminer le résultat du test d'élément sur l'échantillon en utilisant la longueur d'onde principale.

2. Procédé de test anti-interférence, comprenant les étapes consistant à :
ajouter (401) un réactif destiné à réaliser un test d'élément sur un échantillon et mélanger uniformément pour obtenir un mélange échantillon ;
irradier (402) le mélange échantillon en utilisant une lumière multi-longueur d'onde, où la lumière multi-longueur d'onde comprend une longueur d'onde principale et une longueur d'onde secondaire correspondant au test d'élément de l'échantillon ;
acquérir (403) une intensité lumineuse initiale γ1 de la lumière de longueur d'onde principale transmise par l'échantillon, une intensité lumineuse initiale γ2 de la lumière de longueur d'onde secondaire transmise par l'échantillon, et une valeur de seuil d'intensité lumineuse α correspondant au test d'élément ; et
réaliser (404) un test anti-interférence sur l'échantillon selon des résultats de comparaison de γ1 et γ2 avec α,
où le fait de réaliser un test anti-interférence sur l'échantillon selon des résultats de comparaison de γ1 et γ2 avec α comprend :
en réponse à γ1 qui est supérieure ou égale à α, déterminer le résultat du test d'élément sur l'échantillon en utilisant la longueur d'onde principale ; et
en réponse à γ1 qui est inférieure à α, et γ2 qui est supérieure ou égale à α, déterminer le résultat du test d'élément sur l'échantillon en utilisant la longueur d'onde secondaire,
où le fait de réaliser (404) un test anti-interférence sur l'échantillon selon des résultats de comparaison de γ1 et γ2 avec α comprend en outre :
en réponse à γ2 qui est inférieure à α, acquérir (801) une intensité lumineuse transmise initiale γ4 du mélange échantillon sous irradiation de la longueur d'onde secondaire après augmentation d'au moins un d'une intensité de source de lumière correspondant à la longueur d'onde secondaire et d'un gain d'un circuit de capteur destiné à collecter l'intensité lumineuse transmise ; et
en réponse à γ4 qui est supérieure ou égale à α, déterminer le résultat du test d'élément sur l'échantillon en utilisant la longueur d'onde secondaire.

3. Procédé selon la revendication 1, comprenant en outre les étapes consistant à :
en réponse à γ3 qui est inférieure à α, diluer (701) le mélange échantillon ;
acquérir (702) une intensité lumineuse initiale γ5 du mélange échantillon dilué sous irradiation de la longueur d'onde principale ; et
en réponse à γ5 qui est supérieure ou égale à α, réaliser (703) le test anti-interférence sur l'échantillon en utilisant la longueur d'onde principale.

4. Procédé selon la revendication 2, comprenant en outre les étapes consistant à :
en réponse à γ4 qui est inférieure à α, diluer (901) le mélange échantillon ;
acquérir (902) une intensité lumineuse initiale γ6 du mélange échantillon dilué sous irradiation de la longueur d'onde secondaire ; et
en réponse à γ6 qui est supérieure ou égale à α, réaliser (903) le test anti-interférence sur l'échantillon en utilisant la longueur d'onde secondaire.

5. Analyseur d'échantillons, comprenant :
un récipient de mesure (1101), configuré pour contenir un mélange d'un échantillon et d'un réactif destiné à réaliser un test d'élément ;
un dispositif optique (1102), configuré pour fournir une lumière multi-longueur d'onde et irradier le mélange en utilisant la lumière multi-longueur d'onde, où la lumière multi-longueur d'onde comprend une longueur d'onde principale et une longueur d'onde secondaire correspondant au test d'élément de l'échantillon ;
un dispositif de collecte d'intensité lumineuse (1103), configuré pour acquérir des intensités lumineuses initiales γ1 et γ2 transmises par le mélange échantillon sous irradiation de la longueur d'onde principale et de la longueur d'onde secondaire respectivement ;
un processeur (1104), configuré pour :
acquérir une valeur de seuil d'intensité lumineuse α correspondant au test d'élément ; et
réaliser un test anti-interférence sur l'échantillon selon des résultats de comparaison de γ1 et γ2 avec α,
où le processeur (1104) est configuré pour :
en réponse à γ1 qui est supérieure ou égale à α, déterminer le résultat du test d'élément sur l'échantillon en utilisant la longueur d'onde principale ; et
en réponse à γ1 qui est inférieure à α, et γ2 qui est supérieure ou égale à α, déterminer le résultat du test d'élément sur l'échantillon en utilisant la longueur d'onde secondaire,
où le processeur (1104) est en outre configuré pour :
en réponse à γ2 qui est inférieure à α, acquérir une intensité lumineuse transmise initiale γ3 du mélange échantillon sous irradiation de la longueur d'onde principale après augmentation d'au moins un d'une intensité de source de lumière correspondant à la longueur d'onde principale et d'un gain d'un circuit de capteur destiné à collecter l'intensité lumineuse transmise ; et
en réponse à γ3 qui est supérieure ou égale à α, déterminer le résultat du test d'élément sur l'échantillon en utilisant la longueur d'onde principale.

6. Analyseur d'échantillons, comprenant :
un récipient de mesure (1101), configuré pour contenir un mélange d'un échantillon et d'un réactif destiné à réaliser un test d'élément ;
un dispositif optique (1102), configuré pour fournir une lumière multi-longueur d'onde et irradier le mélange en utilisant la lumière multi-longueur d'onde, où la lumière multi-longueur d'onde comprend une longueur d'onde principale et une longueur d'onde secondaire correspondant au test d'élément de l'échantillon ;
un dispositif de collecte d'intensité lumineuse (1103), configuré pour acquérir des intensités lumineuses initiales γ1 et γ2 transmises par le mélange échantillon sous irradiation de la longueur d'onde principale et de la longueur d'onde secondaire respectivement ;
un processeur (1104), configuré pour :
acquérir une valeur de seuil d'intensité lumineuse α correspondant au test d'élément ; et
réaliser un test anti-interférence sur l'échantillon selon des résultats de comparaison de γ1 et γ2 avec α,
où le processeur (1104) est configuré pour :
en réponse à γ1 qui est supérieure ou égale à α, déterminer le résultat du test d'élément sur l'échantillon en utilisant la longueur d'onde principale ; et
en réponse à γ1 qui est inférieure à α, et γ2 qui est supérieure ou égale à α, déterminer le résultat du test d'élément sur l'échantillon en utilisant la longueur d'onde secondaire,
où le processeur (1104) est en outre configuré pour :
en réponse à γ2 qui est inférieure à α, acquérir une intensité lumineuse initiale γ4 transmise par le mélange échantillon sous irradiation de la longueur d'onde secondaire après augmentation d'au moins un d'une intensité de source de lumière correspondant à la longueur d'onde secondaire et d'un gain d'un circuit de capteur destiné à collecter l'intensité lumineuse transmise ; et
en réponse à γ4 qui est supérieure ou égale à α, déterminer le résultat du test d'élément sur l'échantillon en utilisant la longueur d'onde secondaire.

7. Analyseur d'échantillons selon la revendication 5, dans lequel le processeur (1104) est en outre configuré pour :
en réponse à γ3 qui est inférieure à α, diluer le mélange échantillon ;
acquérir l'intensité lumineuse initiale γ5 du mélange échantillon dilué sous irradiation de la longueur d'onde principale ; et
en réponse à γ5 qui est supérieure ou égale à α, réaliser le test anti-interférence sur l'échantillon en utilisant la longueur d'onde principale.

8. Analyseur d'échantillons selon la revendication 6, dans lequel le processeur est en outre configuré pour :
en réponse à γ4 qui est inférieure à α, diluer le mélange échantillon ;
acquérir une intensité lumineuse initiale γ6 du mélange échantillon dilué sous irradiation de la longueur d'onde secondaire ; et
en réponse à γ6 qui est supérieure ou égale à α, réaliser le test anti-interférence sur l'échantillon en utilisant la longueur d'onde secondaire.

9. Analyseur d'échantillons selon l'une quelconque des revendications 5 à 8, où l'analyseur d'échantillons est un analyseur de coagulation.
